# EUROPEAN PATENT APPLICATION

(11) **EP 4 635 678 A1**
(43) Date of publication of application: **22.10.2025**
(21) Application number: 24756531.0
(22) Date of filing: 15.01.2024
(51) Int. Cl.: B24B 49/12, B23D 1/20, B23K 26/364, B23Q 15/00, B23Q 17/24, B24B 19/02, B24B 27/06, B24B 49/18, G01B 11/24, H01L 21/301

(54) **GROOVE SHAPE MEASUREMENT METHOD, GROOVE SHAPE MEASUREMENT DEVICE, PROCESSING DEVICE CONTROL METHOD, AND PROCESSING DEVICE**

(30) Priority: 13.02.2023 JP 2023020119
(71) Applicant: Tokyo Seimitsu Co., Ltd., Hachioji-shi, Tokyo 192-8515 (JP)
(72) Inventor: SHIMIZU, Tasuku, Hachioji-shi, Tokyo 192-8515 (JP); TAMOGAMI, Takashi, Hachioji-shi, Tokyo 192-8515 (JP); IWAKI, Satoru, Hachioji-shi, Tokyo 192-8515 (JP); TSUSHIMA, Takeo, Hachioji-shi, Tokyo 192-8515 (JP)
(74) Representative: Gill Jennings & Every LLP
(86) International application number: PCT/JP2024/000789
(87) International publication number: WO 2024/171680

(57) **Abstract**

This groove shape measurement method has a coordinate data acquisition step of acquiring a plurality of pieces of three-dimensional coordinate data (three-dimensional coordinate data set (60)) indicating a shape of a machined groove (9) formed in a machining target object (workpiece (W)) in a machining feed direction (X direction) by a machining device (dicing device (10)) (Step S1), a projection data generation step of generating two-dimensional projection data (62) of the machined groove (9) by projecting the three-dimensional coordinate data onto a two-dimensional plane (two-dimensional plane (61)) perpendicular to the machining feed direction (Step S2), and a cross-sectional profile calculation step of calculating a cross-sectional profile (64) of the machined groove (9) on the basis of the two-dimensional projection data (62) (Step S3).

## Description

### TECHNICAL FIELD

The present invention relates to a groove shape measurement method for measuring a cross-sectional profile of a machined groove, a groove shape measurement device, a machining device control method, and a machining device. Priority is claimed on Japanese Patent Application No. 2023-020119, filed February 13, 2023, the content of which is incorporated herein by reference.

### BACKGROUND ART

Dicing devices (machining devices) performing cutting of workpieces such as wafers using a disc-shaped blade rotated at a high speed by a spindle are known. In such dicing devices, a cross-sectional profile of a machined groove (also referred to as a kerf) is measured to determine the state of the blade during machining, to determine the machining quality of the machined groove, to detect debris, to detect the amount of deviation in the machining position of the machined groove, and the like.

For example, in the dicing device described in Patent Document 1, XY-plane images of a machined groove formed in an X direction (machining feed direction) are repeatedly captured while a confocal microscope is moved in a Z direction, and then the XY-plane images are stacked in the Z direction to configure three-dimensional data (also referred to as a three-dimensional model) of the machined groove. In addition, in the dicing devices described in Patent Document 1 and Patent Document 2, a three-dimensional coordinate data set indicating the shape of a machined groove is measured using a white light interference microscope or a laser displacement meter, and three-dimensional data of the machined groove is configured on the basis of this three-dimensional coordinate data set. Further, in the dicing devices described in Patent Document 1 and Patent Document 2, a cross-sectional profile of the machined groove is calculated by cutting out a certain cross section from the three-dimensional data of the machined groove.

### Citation List

### Patent Document

Patent Document 1: Japanese Unexamined Patent Application, First Publication No. 2015-085397
Patent Document 2: Japanese Unexamined Patent Application, First Publication No. 2021-084201

### SUMMARY OF INVENTION

### Technical Problem

In the foregoing dicing devices described in Patent Document 1 and Patent Document 2, it is necessary to configure three-dimensional data of the machined groove, which increases a processing load on a control device, for example, a personal computer (PC), for the dicing device performing this configuration processing.

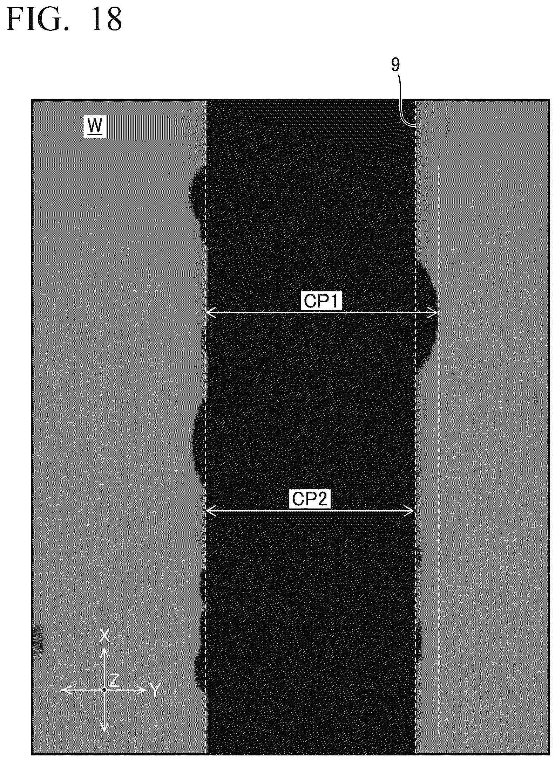

FIG. 18 is an explanatory view of problems of a technology in the related art. As shown in FIG. 18, in the foregoing dicing devices described in Patent Document 1 and Patent Document 2, a cross-sectional profile of a machined groove 9 is calculated by cutting out certain cross sections from three-dimensional data of the machined groove 9 formed in a workpiece W in the X direction (machining feed direction). At this time, when the shape of the machined groove 9 has changed in the X direction, the cross-sectional profile changes depending on cut-out positions CP1 and CP2 of the cross sections, and therefore it may not be possible to obtain a highly accurate cross-sectional profile of the machined groove 9.

The present invention has been made in consideration of such circumstances, and an object thereof is to provide a groove shape measurement method, a groove shape measurement device, a machining device control method, and a machining device capable of realizing a reduction in processing load on a control device for the machining device and acquisition of a highly accurate cross-sectional profile of a machined groove.

### Solution to Problem

A groove shape measurement method for achieving the object of the present invention has a coordinate data acquisition step of acquiring a plurality of pieces of three-dimensional coordinate data indicating a shape of a machined groove formed in a machining target object in a machining feed direction by a machining device, a projection data generation step of generating two-dimensional projection data of the machined groove by projecting the three-dimensional coordinate data acquired in the coordinate data acquisition step onto a two-dimensional plane perpendicular to the machining feed direction, and a cross-sectional profile calculation step of calculating a cross-sectional profile of the machined groove on the basis of the two-dimensional projection data generated in the projection data generation step.

According to this groove shape measurement method, it is possible to calculate a cross-sectional profile of the machined groove without calculating three-dimensional data of the machined groove.

In the groove shape measurement method according to another aspect of the present invention, in the cross-sectional profile calculation step, the cross-sectional profile is calculated by performing at least one of noise removal processing and statistical processing with respect to the two-dimensional projection data. Accordingly, it is possible to obtain a highly accurate cross-sectional profile.

In the groove shape measurement method according to another aspect of the present invention, processing of generating the two-dimensional projection data executed in the projection data generation step and processing of calculating the cross-sectional profile executed in the cross-sectional profile calculation step are executed in a distributed manner by a plurality of calculation devices. Accordingly, it is possible to reduce the processing load on each of the calculation devices.

In the groove shape measurement method according to another aspect of the present invention, one of the plurality of calculation devices is a control device controlling the machining device. Accordingly, it is possible to reduce the processing load on the control device.

In the groove shape measurement method according to another aspect of the present invention, the plurality of calculation devices include control devices for the machining devices provided in a plurality of the respective machining devices, and a shared calculation device shared by the plurality of machining devices. Accordingly, even when a plurality of machining devices are installed, it is possible to realize a reduction in processing load on the control device and acquisition of a highly accurate cross-sectional profile of a machined groove, while reducing costs.

In the groove shape measurement method according to another aspect of the present invention, processing of generating the two-dimensional projection data executed in the projection data generation step and processing of calculating the cross-sectional profile executed in the cross-sectional profile calculation step are executed by only a calculation device different from a control device controlling the machining device. Accordingly, it is possible to further reduce the processing load on the control device.

In the groove shape measurement method according to another aspect of the present invention, the calculation device is a shared calculation device shared by a plurality of the machining devices. Accordingly, even when a plurality of machining devices are installed, it is possible to realize a reduction in processing load on the control device and acquisition of a highly accurate cross-sectional profile of a machined groove, while reducing costs.

The groove shape measurement method according to another aspect of the present invention further has a numerical value calculation step of calculating a desired numerical value indicating a machined state of the machined groove on the basis of the cross-sectional profile calculated in the cross-sectional profile calculation step. Accordingly, it is possible to calculate a cross-sectional profile of the machined groove and a desired numerical value without calculating three-dimensional data of the machined groove.

In the groove shape measurement method according to another aspect of the present invention, in the cross-sectional profile calculation step, the cross-sectional profile is calculated by performing at least one of noise removal processing and statistical processing with respect to the two-dimensional projection data. Accordingly, it is possible to obtain a highly accurate cross-sectional profile and a desired numerical value.

In the groove shape measurement method according to another aspect of the present invention, processing of generating the two-dimensional projection data executed in the projection data generation step, processing of calculating the cross-sectional profile executed in the cross-sectional profile calculation step, and processing of calculating the numerical value in the numerical value calculation step are executed in a distributed manner by a plurality of calculation devices. Accordingly, it is possible to reduce the processing load on each of the calculation devices.

In the groove shape measurement method according to another aspect of the present invention, one of the plurality of calculation devices is a control device controlling the machining device. Accordingly, it is possible to reduce the processing load on the control device.

In the groove shape measurement method according to another aspect of the present invention, the plurality of calculation devices include control devices for the machining devices provided in a plurality of the respective machining devices, and a shared calculation device shared by the plurality of machining devices. Accordingly, even when a plurality of machining devices are installed, it is possible to realize a reduction in processing load on the control device, acquisition of a highly accurate cross-sectional profile of a machined groove, and calculation processing of calculating a desired numerical value from the cross-sectional profile, while reducing costs.

In the groove shape measurement method according to another aspect of the present invention, processing of generating the two-dimensional projection data executed in the projection data generation step, processing of calculating the cross-sectional profile executed in the cross-sectional profile calculation step, and processing of calculating the numerical value in the numerical value calculation step are executed by only a calculation device different from a control device controlling the machining device. Accordingly, even when a plurality of machining devices are installed, it is possible to realize a reduction in processing load on the control device, acquisition of a highly accurate cross-sectional profile of a machined groove, and calculation processing of calculating a desired numerical value from the cross-sectional profile, while reducing costs.

In the groove shape measurement method according to another aspect of the present invention, the calculation device is a shared calculation device shared by a plurality of the machining devices. Accordingly, even when a plurality of machining devices are installed, it is possible to realize a reduction in processing load on the control device, acquisition of a highly accurate cross-sectional profile of a machined groove, and calculation processing of calculating a desired numerical value from the cross-sectional profile, while reducing costs.

A machining device control method for achieving the object of the present invention has a coordinate data acquisition step of acquiring a plurality of pieces of three-dimensional coordinate data indicating a shape of a machined groove formed in a machining target object by a machining device, a projection data generation step of generating two-dimensional projection data of the machined groove by projecting the three-dimensional coordinate data acquired in the coordinate data acquisition step onto a two-dimensional plane, a cross-sectional profile calculation step of calculating a cross-sectional profile of the machined groove on the basis of the two-dimensional projection data generated in the projection data generation step, a numerical value calculation step of calculating a desired numerical value indicating a machined state of the machined groove on the basis of the cross-sectional profile calculated in the cross-sectional profile calculation step, and a control step of feedback-controlling the machining device such that the numerical value satisfies a threshold set in advance on the basis of the numerical value calculated in the numerical value calculation step. Accordingly, it is possible to form a machined groove having a desired machined shape.

A groove shape measurement device for achieving the object of the present invention includes a coordinate data acquisition unit acquiring a plurality of pieces of three-dimensional coordinate data indicating a shape of a machined groove formed in a machining target object in a machining feed direction by a machining device, a projection data generation unit generating two-dimensional projection data of the machined groove by projecting the three-dimensional coordinate data acquired by the coordinate data acquisition unit onto a two-dimensional plane perpendicular to the machining feed direction, and a cross-sectional profile calculation unit calculating a cross-sectional profile of the machined groove on the basis of the two-dimensional projection data generated by the projection data generation unit.

The groove shape measurement device according to another aspect of the present invention further includes a numerical value calculation unit calculating a desired numerical value indicating a machined state of the machined groove on the basis of the cross-sectional profile calculated by the cross-sectional profile calculation unit.

A machining device for achieving the object of the present invention includes a machining section for forming a machined groove in a machined object, the groove shape measurement device described above, and a control unit feedback-controlling the machining section such that the numerical value satisfies a threshold set in advance on the basis of the numerical value calculated by the numerical value calculation unit. Advantageous Effects of Invention

The present invention can realize a reduction in processing load on a control device for a machining device and acquisition of a highly accurate cross-sectional profile of a machined groove.

### BRIEF DESCRIPTION OF DRAWINGS

[FIG. 1] A perspective view of a dicing device of a first embodiment.
[FIG. 2] An external perspective view of a machining section.
[FIG. 3] A block diagram of the dicing device of the first embodiment.
[FIG. 4] An explanatory view of the generation of two-dimensional projection data performed by a projection data generation unit.
[FIG. 5] An explanatory view of calculation of a cross-sectional profile performed by a cross-sectional profile calculation unit.
[FIG. 6] A flowchart showing a flow of processing of measuring a cross-sectional profile of a machined groove performed by the dicing device of the first embodiment.
[FIG. 7] A block diagram of the dicing device of a second embodiment.
[FIG. 8] A block diagram of the dicing device of a third embodiment.
[FIG. 9] A block diagram of the dicing device of a fourth embodiment.
[FIG. 10] A block diagram of the dicing device of a fifth embodiment.
[FIG. 11] A block diagram of the dicing device of a sixth embodiment.
[FIG. 12] An explanatory view of an example of calculation processing performed by a numerical value calculation unit of the sixth embodiment.
[FIG. 13] A flowchart showing a flow of processing of measuring the cross-sectional profile of the machined groove and feedback control performed by the dicing device of the sixth embodiment.
[FIG. 14] A block diagram of the dicing device of a seventh embodiment.
[FIG. 15] A schematic view showing an example of a constitution of a laser machining section.
[FIG. 16] An explanatory view of an example of processing of calculating a numerical value performed by the numerical value calculation unit of the seventh embodiment.
[FIG. 17] An explanatory view of another example of the processing of calculating a numerical value performed by the numerical value calculation unit of the seventh embodiment.
[FIG. 18] An explanatory view of problems of a technology in the related art.

### DESCRIPTION OF EMBODIMENTS

### [First embodiment]

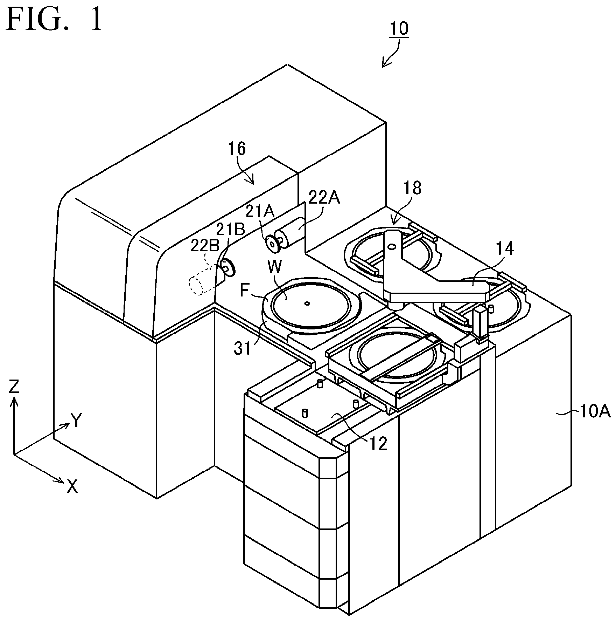

FIG. 1 is a perspective view of a dicing device 10 (corresponding to a machining device) of a first embodiment. In the diagram, XYZ directions are directions orthogonal to each other. The XY directions are directions parallel to a horizontal direction, the Z direction is a direction orthogonal to the horizontal direction.

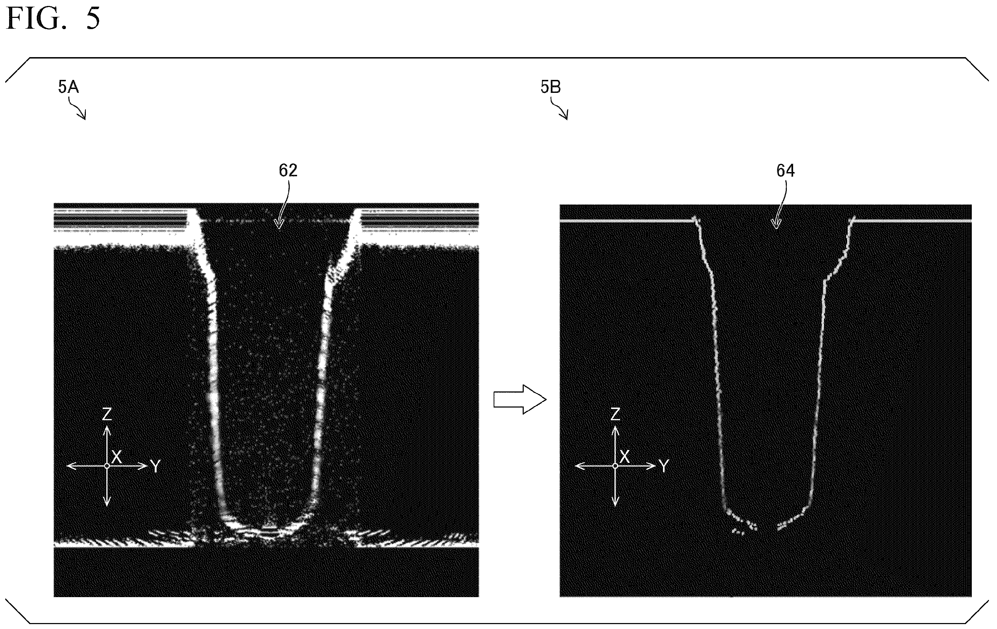

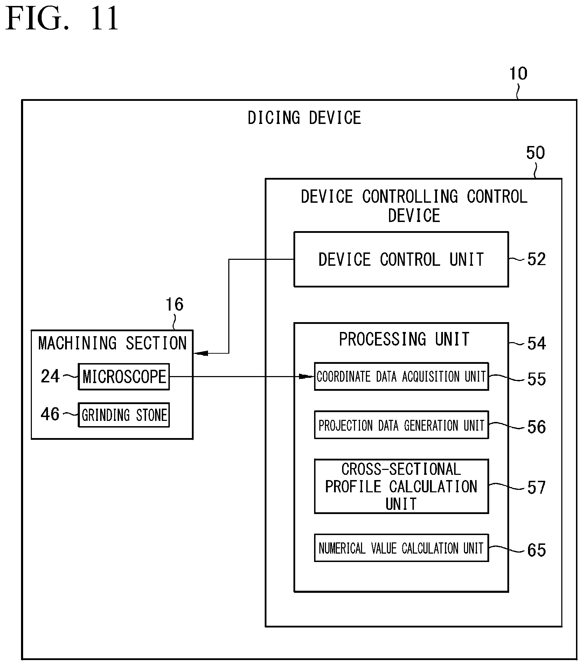

As shown in FIG. 1, the dicing device 10 performs dicing of a flat plate-shaped workpiece W (machining target object) such as a silicon wafer (semiconductor wafer). In addition, the dicing device 10 measures a cross-sectional profile 64 (refer to FIG. 5) of a machined groove 9 (refer to FIG. 11 already described) formed in the workpiece W by dicing. For this reason, the dicing device 10 also functions as a cross-sectional shape measurement device of the present invention. This dicing device 10 includes a loading port 12, a transportation mechanism 14, a machining section 16, and a cleaning section 18.

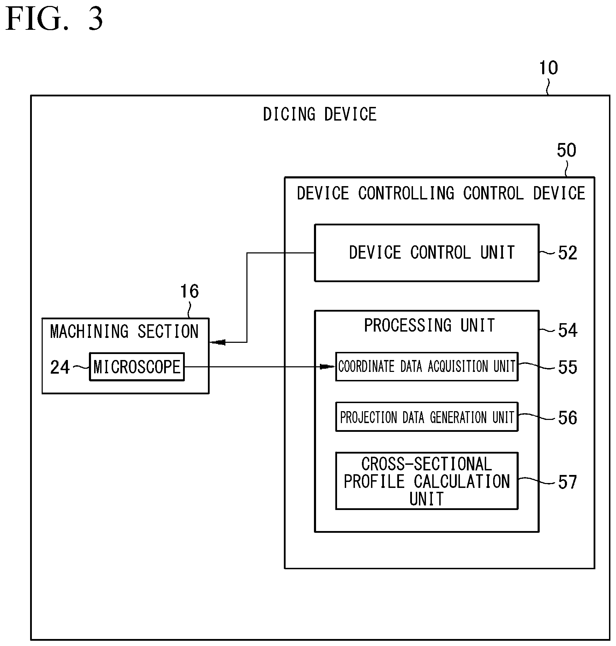

A cassette storing a large number of workpieces W mounted on a frame F is placed on the loading port 12. The transportation mechanism 14 transports the workpieces W. The machining section 16 performs dicing of the workpieces W. The cleaning section 18 performs spin-cleaning of the diced workpieces W. In addition, a device-controlling control device 50 (corresponding to a control device of the present invention, refer to FIG. 3) controlling the operation of each unit in the dicing device 10, and the like are provided inside a housing 10A of the dicing device 10. The device-controlling control device 50 may be provided outside the housing 10A.

Unmachined workpieces W stored inside the cassette placed on the loading port 12 are transported to the machining section 16 by the transportation mechanism 14, and dicing such as cutting or grooving is performed in the machining section 16 in order to divide them into individual chips. Further, the workpieces W already machined by the machining section 16 are transported to the cleaning section 18 by the transportation mechanism 14, are cleaned by the cleaning section 18, are then transported to the loading port 12 by the transportation mechanism 14, and are stored inside the cassette.

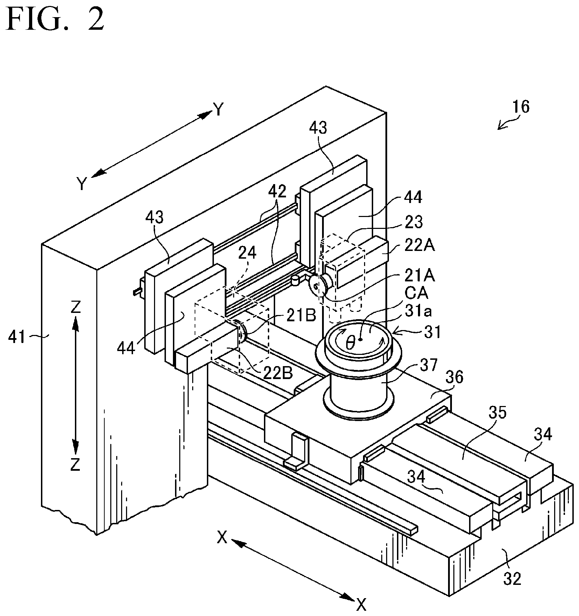

FIG. 2 is an external perspective view of the machining section 16. As shown in FIG. 2, and FIG. 1 already described, the machining section 16 is a twin spindle dicer which includes a pair of blades 21A and 21B, a blade cover (not shown), a pair of spindles 22A and 22B, microscopes 23 and 24, and a table 31.

The blades 21A and 21B are formed to have a disc shape. In addition, tip shapes of the blades 21A and 21B, that is, cross-sectional shapes of blade outer circumferential portions (cutting edge portions) of the blades 21A and 21B in a radial direction have a rectangular shape (can also be other shapes such as a V-shape). The blades 21A and 21B are disposed facing each other in the Y direction and are respectively held by the spindles 22A and 22B so as to be rotatable about blade rotation axes parallel to each other in the Y direction.

The spindles 22A and 22B each having a built-in high-frequency motor rotate the blades 21A and 21B about the blade rotation axes at a high speed. Accordingly, the workpiece W is diced by the blades 21A and 21B from a surface (device formation surface) side. The machined groove 9 is formed in the workpiece W through dicing of the workpiece W performed by the blades 21A and 21B.

For example, the microscope 23 is provided in a Z carriage 44 integrally with the spindle 22A (can also be with the spindle 22B) and is held by a Y carriage 43 and the Z carriage 44 so as to be movable in the YZ directions integrally with the spindle 22A. The microscope 23 captures an image of a pattern and the machined groove 9 on the surface of the workpiece W from the surface side of the workpiece W. An image of the surface of the workpiece W captured by this microscope 23 is used for alignment of the blades 21A and 21B with respect to streets of the workpiece W and for kerf checking confirming the position of the machined groove 9.

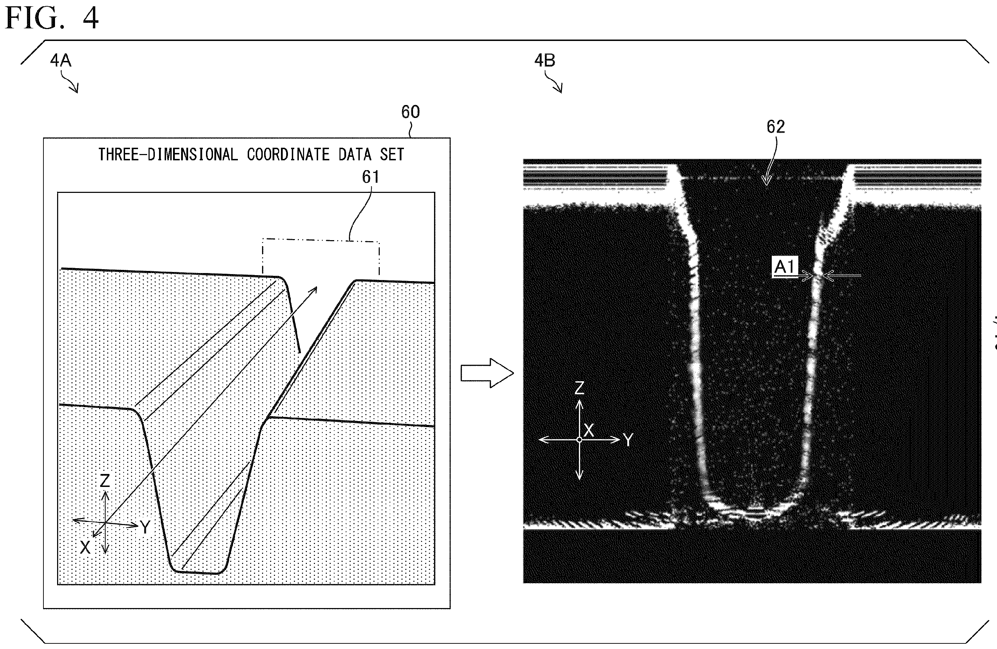

The microscope 24 is provided in the Z carriage 44 integrally with the spindle 22B (can also be with the spindle 22A) and is held by the Y carriage 43 and the Z carriage 44 so as to be movable in the YZ directions. For example, a white light interference microscope, a laser microscope (laser displacement meter), or the like is used as the microscope 24, which acquires a three-dimensional coordinate data set 60 (also referred to as point cloud data, refer to FIG. 4) indicating the shape (3D shape) of the machined groove 9. The three-dimensional coordinate data set 60 (described below in detail) is used for generating the cross-sectional profile 64 of the machined groove 9 (refer to FIG. 5). Both the microscopes 23 and 24 may be constituted of "a microscope for alignment and kerf checking" and "a microscope for acquiring a three-dimensional coordinate data set (white light interference microscope or the like)".

In the present embodiment, the microscope 23 and the microscope 24 are provided separately, but both may be integrated.

The table 31 has a workpiece-holding surface 31a formed to have a porous shape, and the workpiece W is adsorbed and held by the workpiece-holding surface 31a from its rear surface side. The table 31 is held by an X carriage 36 (described below) so as to be movable in the X direction and is held by a rotation unit 37 (described below) so as to be rotatable about a rotation axis CA.

The machining section 16 is provided with an X base 32, an X guide 34, an X drive unit 35, the X carriage 36, and the rotation unit 37. The X base 32 has a flat plate shape extending in the X direction, and the X guide 34 is provided on its upper surface in the Z direction. The X guide 34 has a shape extending in the X direction and guides the X carriage 36 in the X direction. For example, an actuator such as a linear motor is used as the X drive unit 35, which moves the X carriage 36 along the X guide 34 in the X direction.

The rotation unit 37 is provided on the upper surface of the X carriage 36. In addition, the table 31 is provided on the upper surface of the rotation unit 37. The rotation unit 37 is rotationally driven by a rotation drive unit (not shown) constituted of a motor, gears, and the like. Accordingly, the rotation unit 37 rotates the table 31 in a θ direction about the rotation axis CA thereof.

The workpiece W transported by the transportation mechanism 14 from the loading port 12 is adsorbed and held by the table 31 so that it moves and rotates integrally with the table 31. A plurality of tables 31 may be provided in the machining section 16.

In addition, the machining section 16 is provided with a Y base 41, a Y guide 42, a pair of Y carriages 43, and a pair of Z carriages 44. The Y base 41 has a gate shape straddling the X base 32 in the Y direction. The Y guide 42 is provided on a side surface of this Y base 41 on a side in the X direction. The Y guide 42 has a shape extending in the Y direction and guides each of the pair of Y carriages 43 in the Y direction. For example, the pair of Y carriages 43 are independently moved along the Y guide 42 by a Y drive unit (not shown) constituted of a stepping motor, ball screws, and the like.

In the pair of Y carriages 43, the Z carriages 44 are provided so as to be movable in the Z direction via a Z drive unit (not shown) constituted of an actuator such as a stepping motor. Further, the spindle 22A and the microscope 23 are provided in one Z carriage 44, and the spindle 22B and the microscope 24 are provided in the other Z carriage 44.

At the time of dicing the workpiece W, each unit in the machining section 16 is driven to execute cutting feeding of the workpiece W in the X direction (machining feed direction), index feeding of the blades 21A and 21B in the Y direction, and cutting feeding thereof in the Z direction, thereby forming the machined groove 9 along each of the streets in the workpiece W.

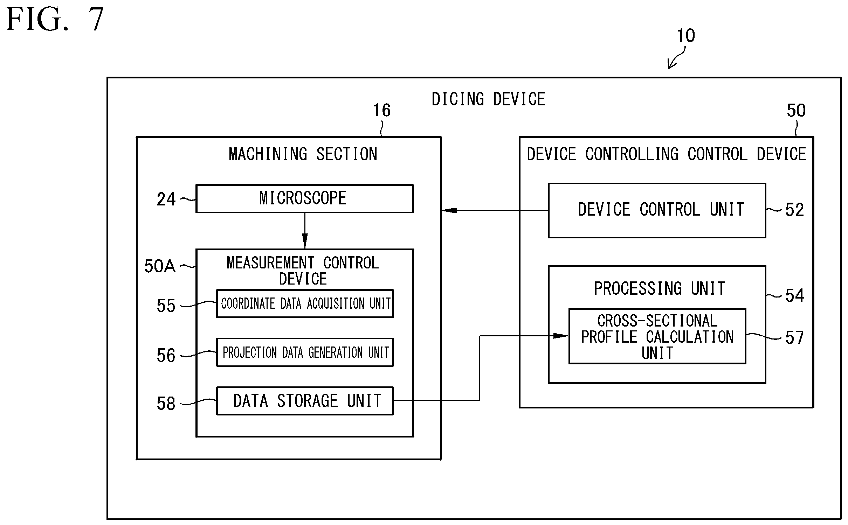

FIG. 3 is a block diagram of the dicing device 10 of the first embodiment. In FIG. 3, among the constituents of the dicing device 10, illustration of constituents that are not related to calculation of the cross-sectional profile 64 (refer to FIG. 5) (described below) will be suitably omitted (the same applies to FIGS. 7 to 9 described below).

As shown in FIG. 3, the device-controlling control device 50 comprehensively controls operation of each unit in the dicing device 10 and functions as a control device and a groove shape measurement device of the present invention. This device-controlling control device 50 includes a calculation circuit constituted of various processors, memories, and the like. Various processors include a central processing unit (CPU), a graphics-processing unit (GPU), an application-specific integrated circuit (ASIC), programmable logic devices (for example, a simple programmable logic device (SPLD), a complex programmable logic device (CPLD), and a field-programmable gate array (FPGA)), and the like. Various functions of the device-controlling control device 50 may be realized by one processor or may be realized by a plurality of processors of the same kind or different kinds.

The device-controlling control device 50 functions as a device control unit 52 and a processing unit 54 by executing a control program (not shown).

At the time of dicing the workpiece W, the device control unit 52 controls each unit in the machining section 16 to execute known alignment and formation (cutting) of the machined groove 9 (refer to the foregoing Patent Documents 1 and 2).

In addition, at the time of measuring the cross-sectional profile 64 of the machined groove 9 (refer to FIG. 5), the device control unit 52 controls each unit in the machining section 16 (the microscope 24 or the like) to execute known measurement of the shape of the machined groove 9 using the microscope 24 (refer to the foregoing Patent Documents 1 and 2).

For example, when the microscope 24 is a white light interference microscope, the device control unit 52 controls each unit in the machining section 16 to execute positional adjustment of the microscope 24 with respect to the workpiece W such that the microscope 24 is positioned on the upward side of the machined groove 9 in the Z direction. Next, while the microscope 24 is caused to perform scanning in the Z direction, the device control unit 52 controls each unit in the machining section 16 to consecutively execute irradiation of the machined groove 9 with illumination light performed by the microscope 24, and image capturing of interference light (reflected light from the machined groove 9 and reference light from a reference surface) performed by a two-dimensional image-capturing element of the microscope 24. When a shape measurement range of the machined groove 9 is larger than a measurable range of the microscope 24, the position of the microscope 24 with respect to the workpiece W is relatively changed in the X direction or the Y direction, and then the scanning by the microscope 24 in the Z direction, the irradiation with illumination light performed by the microscope 24, and the image capturing of interference light described above are repeatedly executed. The microscope 24 may be connected to a processing unit, which is different from the processing unit 54 (described below), processing or constituting an image of an image data set captured by the microscope 24 performing scanning in the Z direction. In this case, an observation unit may be constituted of the microscope 24 and a processing unit different from the processing unit 54 (described below). The observation unit can be connected to the processing unit 54 and receive and transmit data with respect to the processing unit 54.

Moreover, the device control unit 52 executes various evaluations, such as determination of the states of the blades 21A and 21B during machining, determination of the machining quality of the machined groove 9, detection of debris, and detection of the amount of deviation in the machining position of the machined groove 9, on the basis of the cross-sectional profile 64 (refer to FIG. 5) calculated by the processing unit 54 (described below), thereby executing correction or the like of dicing based on the results of this evaluation.

The processing unit 54 generates the cross-sectional profile 64 of the machined groove 9 (refer to FIG. 5) on the basis of the results of shape measurement of the machined groove 9 performed by the microscope 24 without performing configuration processing of three-dimensional data (three-dimensional model) of the machined groove 9. This processing unit 54 functions as a coordinate data acquisition unit 55, a projection data generation unit 56, and a cross-sectional profile calculation unit 57. At least one of the functions of the processing unit 54 (the coordinate data acquisition unit 55, the projection data generation unit 56, and the cross-sectional profile calculation unit 57) may be provided in the microscope 24.

At the time of shape measurement of the machined groove 9 using the microscope 24, the coordinate data acquisition unit 55 acquires the three-dimensional coordinate data set 60 (refer to FIG. 4) configured of a plurality of pieces of three-dimensional coordinate data (XYZ coordinate data) indicating the shape of the machined groove 9 (three-dimensional shape) on the basis of various signals output from this microscope 24. For example, when the microscope 24 is a white light interference microscope, the coordinate data acquisition unit 55 acquires the three-dimensional coordinate data set 60 on the basis of an interference signal output for each pixel thereof from the two-dimensional image-capturing element of the microscope 24 while the microscope 24 is performing scanning in the Z direction (refer to the foregoing Patent Document 2).

FIG. 4 is an explanatory view of the generation of two-dimensional projection data 62 performed by the projection data generation unit 56. In FIG. 4, in order to describe projection of the three-dimensional coordinate data set 60 onto a two-dimensional plane performed by the projection data generation unit 56 with an image, the three-dimensional coordinate data set 60 indicated by the reference sign 4A is shown as three-dimensional data (image). However, in the present embodiment, generation of three-dimensional data of the machined groove 9 is not executed. Projection includes acquisition of data required to generate a two-dimensional image from the three-dimensional coordinate data set 60, generation of a two-dimensional image by acquiring the data required to generate a two-dimensional image from the three-dimensional coordinate data set 60, acquisition of two-dimensional coordinate data or two-dimensional data from the three-dimensional coordinate data set 60, generation of a two-dimensional image by acquiring the two-dimensional coordinate data or the two-dimensional data from the three-dimensional coordinate data set 60, conversion of the three-dimensional coordinate data set 60 into a two-dimensional coordinate data set or two-dimensional data, generation of a two-dimensional image by converting the three-dimensional coordinate data set 60 into the two-dimensional coordinate data set or the two-dimensional data, and the like.

As indicated by the reference sign 4A in the image diagram of FIG. 4, the projection data generation unit 56 generates the two-dimensional projection data 62 of the machined groove 9 as indicated by the reference sign 4B by projecting each of dots in the three-dimensional coordinate data set 60 (point cloud) of the machined groove 9 onto a virtual two-dimensional plane 61 (onto a YZ plane) perpendicular to the X direction, which is the machining feed direction. In this specification, "the machining feed direction" is not limited to a relative movement direction (here, the X direction) of the workpiece W with respect to the blades 21A and 21B at the time of dicing and also includes a longitudinal direction of the machined groove 9 (any direction parallel to an XY plane) in consideration of measurement after completion of machining one workpiece W and measurement of a machined line having an angle difference with the machined groove 9 currently being machined (generally orthogonal thereto, but not limited to this).

In the two-dimensional projection data 62, as indicated by the arrow A1 in the diagram, variation in shape of the machined groove 9 in the X direction (refer to FIG. 11) and variation in data due to vibration or the like at the time of shape measurement of the machined groove 9 performed by the microscope 24 occur. For this reason, in the two-dimensional projection data 62, the variation in shape of the machined groove 9 in the X direction is reflected. Since such a two-dimensional projection data 62 can be generated simply by projecting each of the dots in the three-dimensional coordinate data set 60 onto the two-dimensional plane 61, generation processing has a smaller load than the three-dimensional data (three-dimensional model) described in the foregoing Patent Documents 1 and 2, and the like.

FIG. 5 is an explanatory view of calculation of the cross-sectional profile 64 performed by the cross-sectional profile calculation unit 57. As indicated by the reference sign 5A in FIG. 5, the cross-sectional profile calculation unit 57 calculates the cross-sectional profile 64 of the machined groove 9 as indicated by the reference sign 5B on the basis of the two-dimensional projection data 62 generated by the projection data generation unit 56. Specifically, the cross-sectional profile calculation unit 57 calculates the cross-sectional profile 64 by performing at least one of noise removal processing and statistical processing with respect to the two-dimensional projection data 62. For example, an ideal shape of the cross-sectional profile 64 may be registered and the ideal shape may be identified (noise removal) by a shape pattern-matching method with the two-dimensional projection data 62, or noise may be removed from the two-dimensional projection data 62 using a known machine learning method. This cross-sectional profile 64 is used for various evaluations and correction of dicing performed by the device control unit 52 already described.

In the present embodiment, the projection data generation unit 56 projects the three-dimensional coordinate data set 60 onto the two-dimensional plane 61 perpendicular to the X direction, but the two-dimensional plane 61 may be substantially perpendicular to the X direction. In addition, at intersections of the grid-like streets in the workpiece W, the projection data generation unit 56 may project the three-dimensional coordinate data set 60 of the machined groove 9 parallel to the X direction onto the two-dimensional plane 61 and may project the three-dimensional coordinate data set 60 of the machined groove 9 parallel to the Y direction onto a virtual two-dimensional plane perpendicular to the Y direction which is the longitudinal direction of the machined groove 9. Accordingly, the cross-sectional profile calculation unit 57 can simultaneously calculate the cross-sectional profile 64 of the machined groove 9 parallel to the X direction and the cross-sectional profile 64 of the machined groove 9 parallel to the Y direction.

### [Operation of first embodiment]

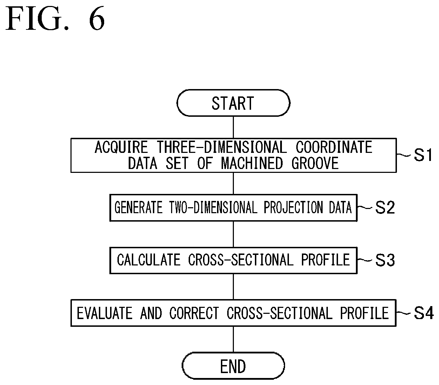

FIG. 6 is a flowchart showing a flow of processing of measuring the cross-sectional profile 64 of the machined groove 9 performed by the dicing device 10 of the first embodiment according to a groove shape measurement method of the present invention.

As shown in FIG. 6, after execution or during execution of dicing of the workpiece W performed by the dicing device 10, the device control unit 52 controls each unit in the machining section 16 (particularly the microscope 24 or the like) to execute the shape measurement of the machined groove 9 by the microscope 24. Accordingly, the coordinate data acquisition unit 55 acquires the three-dimensional coordinate data set 60 indicating the three-dimensional shape of the machined groove 9 on the basis of various signals and the like output from the microscope 24 (Step S1, corresponding to a coordinate data acquisition step of the present invention).

Next, the projection data generation unit 56 generates the two-dimensional projection data 62 of the machined groove 9 by projecting the three-dimensional coordinate data set 60 acquired by the coordinate data acquisition unit 55 onto the two-dimensional plane 61 as shown in FIG. 4 already described (Step S2, corresponding to a projection data generation step of the present invention). Accordingly, the two-dimensional projection data 62 in which variation in the shape of the machined groove 9 in the X direction is reflected as shown in FIG. 11 already described can be obtained, and therefore the shape change of the machined groove 9 in the X direction (machining feed direction) can be statistically (for example, averagely) evaluated. In addition, the number of data points can be increased by projection even for a steep slope of the machined groove 9 having a high data loss rate. Moreover, a load on the device-controlling control device 50 can be further reduced compared with that when generating three-dimensional data (three-dimensional model) as in the related art.

Further, the cross-sectional profile calculation unit 57 calculates the cross-sectional profile 64 of the machined groove 9 by performing noise removal processing, statistical processing, and the like with respect to the two-dimensional projection data 62 generated by the projection data generation unit 56 as shown in FIG. 5 already described (Step S3, corresponding to a cross-sectional profile calculation step of the present invention). Here, since the two-dimensional projection data 62 reflects the variation in shape of the machined groove 9 in the X direction, the two-dimensional projection data 62 manifests surface information of the machined groove 9 at a plurality of Z positions at the same Y coordinate. However, a highly accurate cross-sectional profile 64 can be obtained by performing noise removal and statistical processing of the two-dimensional projection data 62.

In addition, if vibration occurs during shape measurement of the machined groove 9 performed by the microscope 24, variation will occur in the results of the shape measurement (dot data of the three-dimensional coordinate data set 60 in the present invention, and three-dimensional data in the related art). For example, in the dicing device 10, an air guide and a linear motor may be used as the X guide 34 and the X drive unit 35 for the purpose of high accuracy and high durability. However, in this case, a restricting force in the X direction is weakened. For this reason, if the X axis oscillates slightly during shape measurement of the machined groove 9 due to external vibration in the environment of the installation floor of the dicing device 10, vibration caused by other units (spin cleaning or the like) mounted on the dicing device 10, or the like, an error (variation) will occur in the results of the shape measurement of the machined groove 9.

In regard to such a problem, it is necessary to design a highly rigid stage. However, if vibration is curbed to an accuracy level which is acceptable to the dicing device 10 by calculating the cross-sectional profile 64 as in the present embodiment, statistical analysis becomes possible due to the effects of integrating and projecting shape measurement data in the X direction so that improvement in robustness can be realized. In addition, the cross-sectional profile 64 can be measured with higher accuracy than in the case of measuring three-dimensional data in the related art.

If calculation of the cross-sectional profile 64 is completed, the device control unit 52 executes various evaluations, such as determination of the states of the blades 21A and 21B, determination of the machining quality of the machined groove 9, detection of debris, and detection of the amount of deviation in the machining position of the machined groove 9, on the basis of the cross-sectional profile 64, thereby executing correction or the like of dicing based on the results of this evaluation (Step S4).

As above, the dicing device 10 of the first embodiment generates the two-dimensional projection data 62 from the three-dimensional coordinate data set 60 of the machined groove 9 and calculates the cross-sectional profile 64 from this two-dimensional projection data 62, and therefore it is not necessary to generate three-dimensional data and cut out a cross section from this three-dimensional data as in the related art. In addition, even when vibration has occurred during shape measurement of the machined groove 9, the cross-sectional profile 64 can be measured with high accuracy. As a result, a reduction in processing load on the device-controlling control device 50 and acquisition of the highly accurate cross-sectional profile 64 of the machined groove 9 can be realized. **In** addition, the processing load on the device-controlling control device 50 is reduced, thereby improving the measurement speed of the cross-sectional profile 64.

### [Second embodiment]

FIG. 7 is a block diagram of the dicing device 10 of a second embodiment. In the dicing device 10 of the foregoing first embodiment, the device-controlling control device 50 executes cross-sectional profile measurement processing including processing of acquiring the three-dimensional coordinate data set 60, processing of generating the two-dimensional projection data 62, and processing of calculating the cross-sectional profile 64. In contrast, in the dicing device 10 of the second embodiment, part of the cross-sectional profile measurement processing is executed by a measurement control device which is a calculation device different from the device-controlling control device 50, for example, a measurement control device 50A.

As shown in FIG. 7, the dicing device 10 of the second embodiment has basically the same constitution as the dicing device 10 of the foregoing first embodiment except that the measurement control device 50A is provided inside the machining section 16 (can also be outside the machining section 16 or outside the dicing device 10). For this reason, the same reference signs are applied to those having the same function or constitution as those of the foregoing first embodiment, and description thereof will be omitted.

The measurement control device 50A corresponds to a calculation device of the present invention and constitutes the groove shape measurement device of the present invention together with the device-controlling control device 50. The measurement control device 50A is connected to the device-controlling control device 50 via a communication network (not shown). This measurement control device 50A functions as the coordinate data acquisition unit 55 and the projection data generation unit 56 described in the first embodiment by executing a control program (not shown). Accordingly, in the second embodiment, the measurement control device 50A can execute the processing of acquiring the three-dimensional coordinate data set 60 performed by the coordinate data acquisition unit 55, and the processing of generating the two-dimensional projection data 62 performed by the projection data generation unit 56. That is, the measurement control device 50A can execute part of the cross-sectional profile measurement processing.

In addition, the measurement control device 50A is provided with a data storage unit 58. The data storage unit 58 saves the two-dimensional projection data 62 generated by the projection data generation unit 56.

The device-controlling control device 50 of the second embodiment corresponds to the control device of the present invention, and the processing unit 54 thereof functions as the cross-sectional profile calculation unit 57. The cross-sectional profile calculation unit 57 acquires the two-dimensional projection data 62 from the data storage unit 58 or refers to the two-dimensional projection data 62 in the data storage unit 58 and calculates the cross-sectional profile 64 similarly to the first embodiment on the basis of this two-dimensional projection data 62.

As above, in the dicing device 10 of the second embodiment, the cross-sectional profile measurement processing can be executed in a distributed manner by a plurality of calculation devices (the device-controlling control device 50 and the measurement control device 50A). As a result, a reduction in processing load on the device-controlling control device 50 can be achieved, and therefore the device-controlling control device 50 (device control unit 52) can proceed with operation control of each unit in the dicing device 10. In addition, the measurement speed of the cross-sectional profile 64 can be improved. Moreover, effects similar to those described in the foregoing first embodiment can be achieved.

### [Third embodiment]

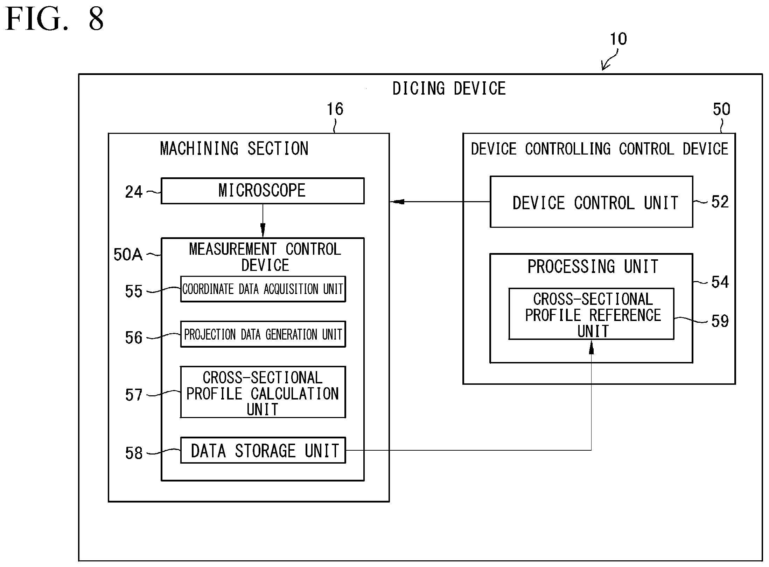

FIG. 8 is a block diagram of the dicing device 10 of a third embodiment. In the dicing device 10 of the foregoing second embodiment, the measurement control device 50A executes part of the cross-sectional profile measurement processing. However, in the dicing device 10 of the third embodiment, the measurement control device 50A executes the entire cross-sectional profile measurement processing.

As shown in FIG. 8, the dicing device 10 of the third embodiment has basically the same constitution as the dicing device 10 of the foregoing second embodiment. Therefore, the same reference signs are applied to those having the same function or constitution as those of each of the foregoing embodiments, and description thereof will be omitted.

The measurement control device 50A of the third embodiment corresponds to the calculation device and the groove shape measurement device of the present invention. This measurement control device 50A functions as the coordinate data acquisition unit 55, the projection data generation unit 56, and the cross-sectional profile calculation unit 57 described in the first embodiment. Accordingly, in the third embodiment, the measurement control device 50A can execute the entire cross-sectional profile measurement processing including the processing of acquiring the three-dimensional coordinate data set 60 performed by the coordinate data acquisition unit 55, the processing of generating the two-dimensional projection data 62 performed by the projection data generation unit 56, and the processing of calculating the cross-sectional profile 64 performed by the cross-sectional profile calculation unit 57.

The data storage unit 58 of the third embodiment saves the cross-sectional profile 64 calculated by the cross-sectional profile calculation unit 57.

The device-controlling control device 50 of the third embodiment corresponds to the control device of the present invention, and the processing unit 54 thereof functions as a cross-sectional profile reference unit 59. The cross-sectional profile reference unit 59 refers to (or may acquire) the cross-sectional profile 64 in the data storage unit 58. Accordingly, various evaluations and correction of dicing can be executed by the device control unit 52.

As above, in the dicing device 10 of the third embodiment, the measurement control device 50A executes the entire cross-sectional profile measurement processing, and therefore a processing load on the device-controlling control device 50 can be further reduced compared with the second embodiment. **In** addition, effects similar to those described in each of the foregoing embodiments can be achieved.

### [Fourth embodiment]

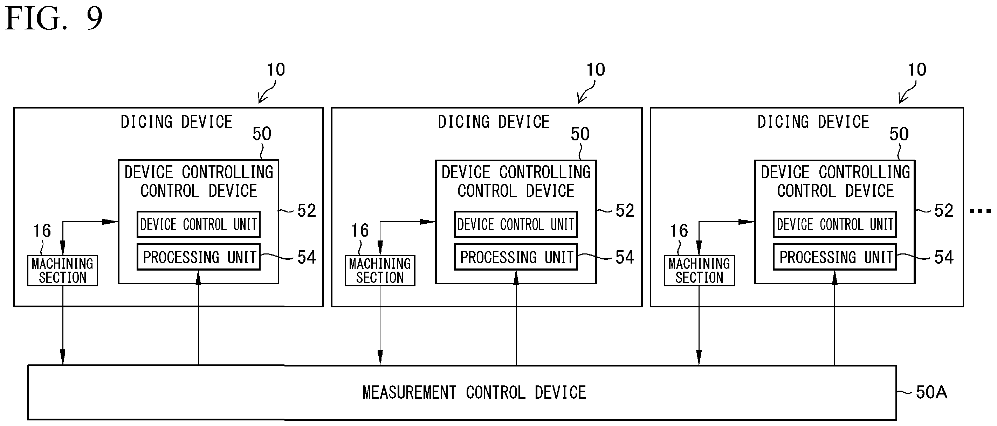

FIG. 9 is a block diagram of the dicing device 10 of a fourth embodiment. As shown in FIG. 9, in the fourth embodiment, a plurality of dicing devices 10 of the foregoing second embodiment or the foregoing third embodiment are provided, and the dicing devices 10 share one measurement control device 50A.

Each of the dicing devices 10 (including the measurement control device 50A) of the fourth embodiment has basically the same constitution as the dicing device 10 of the foregoing second or third embodiment. Therefore, the same reference signs are applied to those having the same function or constitution as those of each of the foregoing embodiments, and description thereof will be omitted. The measurement control device 50A corresponds to a shared calculation device of the present invention, which executes the cross-sectional profile measurement processing together with the device-controlling control device 50 of each of the dicing devices 10 as described in the foregoing second embodiment or executes the cross-sectional profile measurement processing alone as described in the foregoing third embodiment.

In each of the dicing devices 10, although high processing capacity is required when the cross-sectional profile measurement processing is executed, the load is in a low state at the time of dicing. For this reason, by sharing one measurement control device 50A among a plurality of dicing devices 10 as in the fourth embodiment, a reduction in processing load on the device-controlling control device 50 of each of the dicing devices 10 can be achieved without increasing the number of measurement control devices 50A. As a result, even when a plurality of dicing devices 10 are installed, effects similar to those of each of the foregoing embodiments can be achieved while reducing costs. In this case, it is preferable to shift the timing of the cross-sectional profile measurement processing for each of the plurality of dicing devices 10.

### [Fifth embodiment]

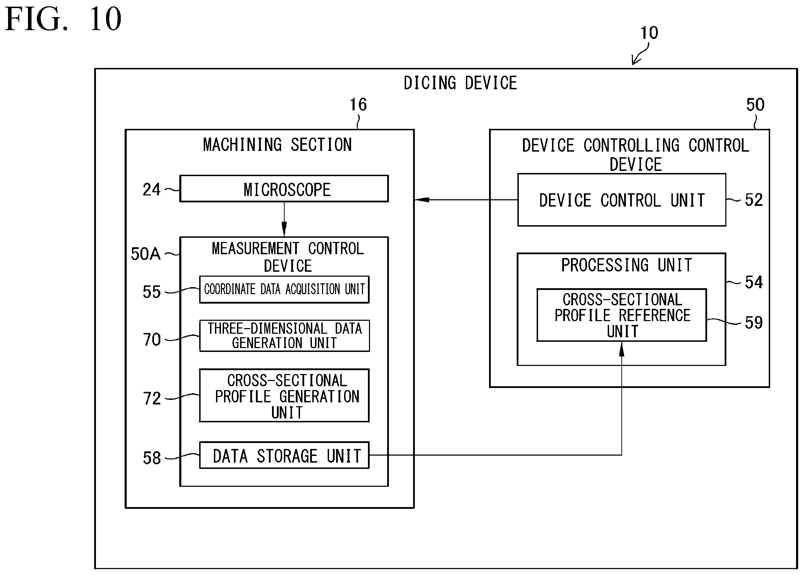

FIG. 10 is a block diagram of the dicing device 10 of a fifth embodiment. In the foregoing third embodiment (refer to FIG. 8), the measurement control device 50A executes the cross-sectional profile measurement processing (processing of acquiring the three-dimensional coordinate data set 60, processing of generating the two-dimensional projection data 62, and processing of calculating the cross-sectional profile 64). In this manner, when the device-controlling control device 50 does not execute the processing of measuring the cross-sectional profile 64, the processing load on the device-controlling control device 50 can be reduced regardless of the details of the processing executed by the measurement control device 50A. Hence, in the dicing device 10 of the fifth embodiment, the measurement control device 50A executes generation of the cross-sectional profile 64 by a method in the related art, that is, generation of the cross-sectional profile 64 from the three-dimensional data of the machined groove 9.

As shown in FIG. 10, the dicing device 10 of the fifth embodiment has basically the same constitution as the dicing device 10 of the foregoing third embodiment except that the functions of the measurement control device 50A partially differ. For this reason, the same reference signs are applied to those having the same function or constitution as those of the foregoing third embodiment, and description thereof will be omitted.

The measurement control device 50A of the fifth embodiment functions as a three-dimensional data generation unit 70 and a cross-sectional profile generation unit 72 in addition to the coordinate data acquisition unit 55 already described.

The three-dimensional data generation unit 70 generates three-dimensional data (three-dimensional model) of the machined groove 9 by a known method (refer to the foregoing Patent Document 1 and the foregoing Patent Document 2) on the basis of the three-dimensional coordinate data set 60 acquired by the coordinate data acquisition unit 55.

The cross-sectional profile generation unit 72 generates the cross-sectional profile 64 of the machined groove 9 by cutting out any cross section or a cross section designated by a user from the three-dimensional data of the machined groove 9 generated by the three-dimensional data generation unit 70. This cross-sectional profile 64 is stored in the data storage unit 58. Accordingly, the cross-sectional profile reference unit 59 of the device-controlling control device 50 refers to (or may acquire) the cross-sectional profile 64 in the data storage unit 58 so that the device control unit 52 executes various evaluations and correction of dicing.

As above, in the dicing device 10 of the fifth embodiment, the measurement control device 50A executes the entire processing related to generation of the cross-sectional profile 64 so that the processing load on the device-controlling control device 50 can be reduced regardless of the details of the processing. As described in the foregoing fourth embodiment (refer to FIG. 9), the measurement control device 50A of the fifth embodiment may be shared by a plurality of dicing devices 10.

### [Sixth embodiment]

FIG. 11 is a block diagram of the dicing device 10 of a sixth embodiment. The dicing device 10 of the sixth embodiment calculates a desired numerical value indicating the machined state of the machined groove 9 on the basis of the cross-sectional profile 64 calculated by the cross-sectional profile calculation unit 57, thereby controlling the machining section 16 such that the machined groove 9 has a desired shape on the basis of the calculation result of this numerical value.

As shown in FIG. 11, the dicing device 10 of the sixth embodiment has basically the same constitution as the dicing device 10 of the foregoing first embodiment except that the machining section 16 includes a grinding stone 46, and the processing unit 54 functions as a numerical value calculation unit 65. For this reason, the same reference signs are applied to those having the same function or constitution as those of the foregoing first embodiment, and description thereof will be omitted.

The grinding stone 46 is used for dressing work and truing work of the blades 21A and 21B. The dressing work is work performed when sharpness of the blades 21A and 21B is degraded so as to eliminate clogging of the blades 21A and 21B or to create new cutting edges by removing worn abrasive grains. The truing work is work performed when tip surfaces of the blades 21A and 21B are deformed into a semicircular shape so as to shape the tip surfaces of the blades 21A and 21B flat or to form blade shapes of the blades 21A and 21B such that a finished shape of the machined groove 9 can be obtained. Since known technologies are adopted as specific methods for the dressing work and the truing work, description thereof will be omitted herein. In addition, different kinds of grinding stones 46 may be used for the dressing work and the truing work.

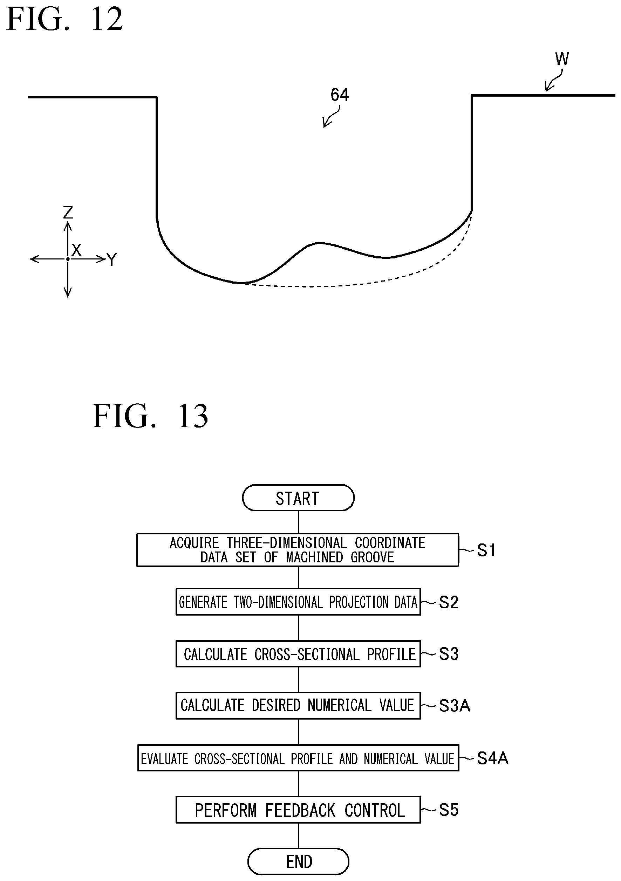

FIG. 12 is an explanatory view of an example of calculation processing performed by the numerical value calculation unit 65 of the sixth embodiment. As shown in FIG. 12, and FIG. 11 already described, the numerical value calculation unit 65 calculates a desired numerical value indicating the machined state of the machined groove 9 on the basis of the cross-sectional profile 64 calculated by the cross-sectional profile calculation unit 57. Examples of this desired numerical value include a numerical value indicating irregularity on a bottom surface of the machined groove 9. During cutting of the machined groove 9 performed by the blades 21A and 21B, cutting chips may not be discharged from the machined groove 9, and this may cause uneven wear (abnormal wear) in center portions on the tip surfaces of the blades 21A and 21B so that the tip surfaces may have substantially a concave shape.

If such uneven wear of the blades 21A and 21B progresses, deterioration in the quality of the machined groove 9 due to burrs and the like, change in the state of contamination on the surface of the workpiece W, change in the shape of cutting chips, damage to the blades 21A and 21B, meandering of the machined groove of a full-cut blade or blade damage during a post-process (at the time of step cutting) of machining the inside of the machined groove 9, or the like will occur. For this reason, the numerical value calculation unit 65 calculates the numerical value indicating the irregularity on the bottom surface of the machined groove 9 (for example, the difference in height between the central portion on the bottom surface and the end portion on the bottom surface) and monitors the irregularity on the bottom surface of the machined groove 9, and therefore uneven wear of the blades 21A and 21B can be detected at an initial stage.

A desired numerical value indicating the machined state of the machined groove 9 is not limited to the numerical value indicating the irregularity on the bottom surface of the machined groove 9 described above, and examples thereof include the width of the machined groove 9, the machining depth, the amount of deviation of the formation position, shapes of the edge portion and the side wall surface, the cross-sectional shape, and its symmetry. In addition, regarding cutting of the machined groove 9, when executing step cutting in which a first machined groove is formed with one of the blades 21A and 21B and a second machined groove is formed on the bottom surface of this first machined groove with the other of the blades 21A and 21B, examples of a desired numerical value described above include the width of the second machined groove, and the amount of deviation between center positions of the first machined groove and the second machined groove.

The device control unit 52 of the sixth embodiment executes various evaluations, such as determination of the states of the blades 21A and 21B, determination of the machining quality of the machined groove 9, detection of debris, and detection of the amount of deviation in the machining position of the machined groove 9, on the basis of the cross-sectional profile 64 calculated by the cross-sectional profile calculation unit 57 and the calculation result of the numerical value calculated by the numerical value calculation unit 65.

At this time, the device control unit 52 functions as the control unit of the present invention and controls the machining section 16 such that the machined groove 9 has a desired shape on the basis of the calculation result of the numerical value by the numerical value calculation unit 65. Specifically the device control unit 52 compares the numerical value calculated by the numerical value calculation unit 65 with a design value (threshold range) of this numerical value, thereby controlling (feedback-controlling) the machining section 16 such that the machined groove 9 has a desired shape on the basis of this comparison result.

For example, when the numerical value calculated by the numerical value calculation unit 65 is the numerical value indicating the irregularity on the bottom surface of the machined groove 9 already described with reference to FIG. 12 and this numerical value exceeds the design value (threshold range), that is, when the blades 21A and 21B are unevenly worn, the device control unit 52 controls the machining section 16 to execute the dressing work of the blades 21A and 21B using the grinding stone 46. In addition, when the degree of uneven wear (deformation) of the blades 21A and 21B is significant, the device control unit 52 controls the machining section 16 to execute the truing work of the blades 21A and 21B using the grinding stone 46. In this manner, the amount of wear of the blades 21A and 21B during the dressing work or the like can be reduced by detecting uneven wear of the blades 21A and 21B at an initial stage on the basis of the numerical value calculated by the numerical value calculation unit 65. As a result, the lifespan of the blades 21A and 21B can be prolonged.

Instead of executing the dressing work or the truing work with the dicing device 10, an operator may be prompted to adjust the shapes of the blades 21A and 21B by the dressing work or the like.

FIG. 13 is a flowchart showing a flow of processing of measuring the cross-sectional profile 64 of the machined groove 9 and feedback control performed by the dicing device 10 of the sixth embodiment according to a machining device control method of the present invention. Since the process up to Step S3 in FIG. 13 is the same as that of the first embodiment already described with reference to FIG. 6, detailed description will be omitted herein.

As shown in FIG. 13, if the processing of calculating the cross-sectional profile 64 (Step S3) is completed, the numerical value calculation unit 65 calculates a desired numerical value indicating the machined state of the machined groove 9 on the basis of the cross-sectional profile 64 (Step S3A, corresponding to a numerical value calculation step of the present invention). Accordingly, the numerical value indicating the irregularity on the bottom surface of the machined groove 9 shown in FIG. 12 already described, and the like are calculated.

Next, the device control unit 52 executes various evaluations already described on the basis of the cross-sectional profile 64 calculated by the cross-sectional profile calculation unit 57 and the calculation result of the numerical value calculated by the numerical value calculation unit 65 (Step S4A). At this time, the device control unit 52 controls (feedback-controls) the machining section 16 such that the machined groove 9 has a desired shape on the basis of the result of comparison between the numerical value calculated by the numerical value calculation unit 65 and the design value (threshold range) of this numerical value (Step S5, corresponding to a control step of the present invention). Accordingly, for example, as shown in FIG. 12 already described, when uneven wear of the blades 21A and 21B has occurred, the device control unit 52 controls the machining section 16 to execute the dressing work or the truing work of the blades 21A and 21B. An operator may be prompted to execute the dressing work or the truing work.

In the dicing device 10 of the sixth embodiment as described above, by calculating a desired numerical value indicating the machined state of the machined groove 9 on the basis of the cross-sectional profile 64, the machining section 16 can be controlled (feedback-controlled) such that the machined groove 9 has a desired shape on the basis of the calculation result of this numerical value.

The processing of calculating the numerical value performed by the numerical value calculation unit 65 and executed in the dicing device 10 of the sixth embodiment may be executed by the measurement control device 50A similarly to the dicing device 10 of the foregoing second and third embodiments. That is, part or all of the processing executed by the processing unit 54 of the sixth embodiment may be executed by the measurement control device 50A. In addition, similar to the foregoing fourth embodiment, a plurality of dicing devices 10 of the sixth embodiment may be provided. Moreover, one measurement control device 50A may be shared by the dicing devices 10. Moreover, in the dicing device 10 of the foregoing fifth embodiment, similar to the dicing device 10 of the sixth embodiment, the processing of calculating the numerical value performed by the numerical value calculation unit 65 and the feedback control of the machining section 16 performed by the device control unit 52 may be executed.

### [Seventh embodiment]

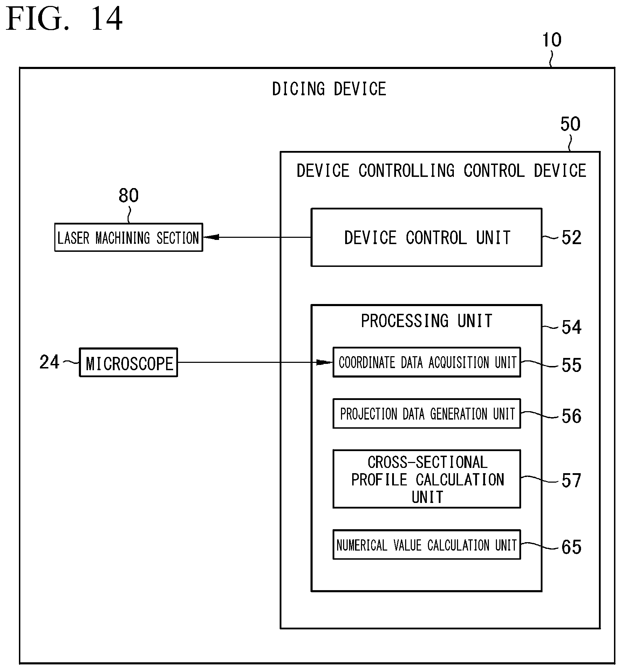

FIG. 14 is a block diagram of the dicing device 10 of a seventh embodiment. In each of the foregoing embodiments, processing of measuring the cross-sectional profile 64 of the machined groove 9 formed in the workpiece W by cutting performed by the pair of blades 21A and 21B has been described as an example, but the constitution of the dicing device 10 and the method for forming the machined groove 9 are not particularly limited. In the dicing device 10 of the seventh embodiment, the machined groove 9 is formed in the workpiece W by laser machining (ablation grooving) processing, and the processing of measuring the cross-sectional profile 64 of this machined groove 9, and the like are executed.

As shown in FIG. 14, the dicing device 10 of the seventh embodiment has basically the same constitution as the dicing device 10 of the foregoing first embodiment except that a laser machining section 80 is provided in place of the machining section 16. For this reason, the same reference signs are applied to those having the same function or constitution as those of the foregoing first embodiment, and description thereof will be omitted. In the seventh embodiment, the laser machining section 80 and the microscope 24 are provided separately, but both may be integrally provided.

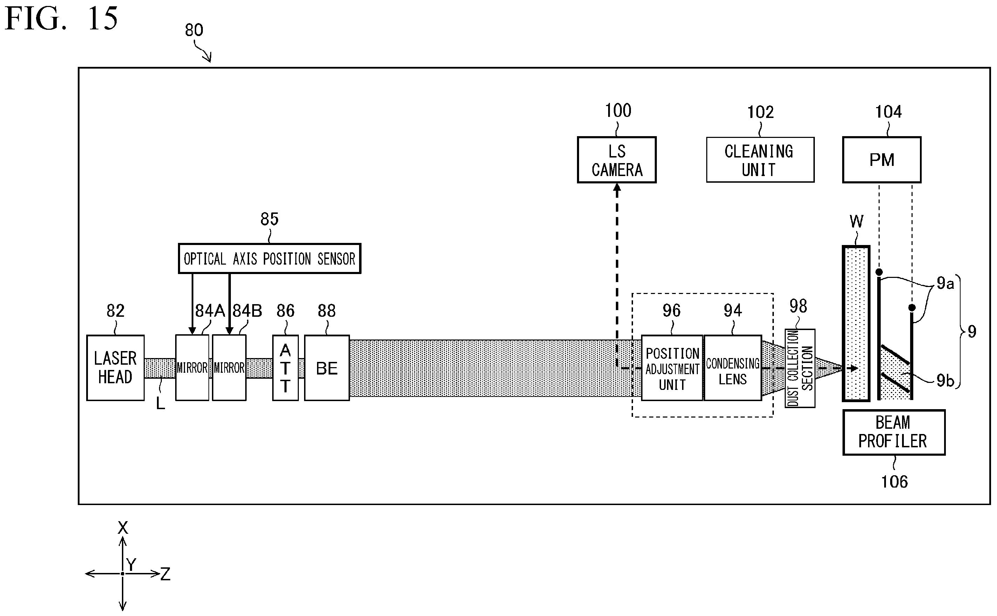

FIG. 15 is a schematic view showing an example of a constitution of the laser machining section 80. As shown in FIG. 15, the laser machining section 80 condenses laser light L on the streets of the workpiece W. In this state, the table 31 (workpiece W) is moved in the X direction by the transportation mechanism 14, thereby executing laser machining for forming the machined groove 9 (an edge cutting groove 9a and a hollow groove 9b) along the streets.

Here, in the sixth embodiment, edge cutting and hollowing known as laser machining are simultaneously executed (for example, refer to Japanese Unexamined Patent Application, First Publication No. 2021-192922). The edge cutting is laser machining for forming two edge cutting grooves 9a parallel to each other along the streets using two rays of the laser light L (spot light). The hollowing is laser machining for forming the hollow groove 9b between the two edge cutting grooves 9a formed by edge cutting using the line-shaped laser light L. Instead of edge cutting and hollowing, the machined groove 9 may be formed by performing ordinary laser machining.

The laser machining section 80 includes a laser head 82, mirrors 84A and 84B, an optical axis position sensor 85, an ATT 86 which is an attenuator, a BE 88 which is a beam expander, a condensing lens 94, a position adjustment unit 96, a dust collection section 98, an LS camera 100 which is a camera for observing a condensing position (an area sensor or the like), a cleaning unit 102, a PM 104 which is a power meter, and a beam profiler 106.

The laser head 82 emits the laser light L (for example, pulsed laser light). For example, conditions of this laser light L are light source: ultraviolet (UV) pulsed laser, wavelength: 400 nm or smaller, repetition frequency: 1 to 100 kHz, and average output: 0.5 to 10 watts, but are not particularly limited to these conditions.

The mirrors 84A and 84B are provided at least in a rotatable manner. The mirrors 84A and 84B may be provided such that their positions are variable. For example, the optical axis position sensor 85 is a position sensitive detector (PSD), which detects each of the optical axis position of the laser light L that has passed through the mirror 84A and the optical axis position of the laser light L that has passed through the mirror 84B. The laser light L can be vertically incident on an optical element (here, the ATT 86) on a downstream side by adjusting the angles or the like of the mirrors 84A and 84B on the basis of the detection results of the optical axis position sensor 85.

The ATT 86 is rotatably provided. This ATT 86 attenuates the laser light L incident thereon via the mirrors 84A and 84B to an adequate level (amplitude).

The BE 88 is provided so as to be able to perform linear motion and turn. This BE 88 increases or decreases the beam diameter of the laser light L incident from the ATT 86. Accordingly, the beam profile of the laser light L at machining points for edge cutting and hollowing can be changed and adjusted.

The condensing lens 94 is provided so as to be able to perform linear motion in the Z direction by the Z drive unit (not shown). In addition, the condensing lens 94 is held so as to be able to perform linear motion in the XY directions by the position adjustment unit 96. The condensing lens 94 individually condenses two rays of the laser light L for edge cutting and the line-shaped laser light L for hollowing on the streets of the workpiece W. The focus of each ray of the laser light L can be adjusted by adjusting the position of the condensing lens 94 in the Z direction. As a result, for example, laser machining can be executed at a just-focus position or laser machining can be executed at an offset position with respect to the streets of the workpiece W. In addition, the positions of the machining points for edge cutting and hollowing can be adjusted by adjusting the position of the condensing lens 94 in the XY directions.

The dust collection section 98 has a dust collection nozzle (not shown) which suctions debris generated during laser machining through the dust collection nozzle. Adhesion of debris to the condensing lens 94 can be reduced by adjusting the position of this dust collection nozzle.

The LS camera 100 captures an image of the machining points for edge cutting and hollowing. The cleaning unit 102 removes dirt on the condensing lens 94.

The PM 104 measures power of the laser light L at the machining points for edge cutting and hollowing. The energy of the laser light L at the machining points can be adjusted to a desired value by adjusting the attenuation rate of the laser light L by the ATT 86 on the basis of the measurement results of the PM 104.

The beam profiler 106 measures the beam energy distribution of the laser light L at the machining points for edge cutting and hollowing. Accordingly, it is possible to measure the beam diameter, the position, and the bias in energy distribution of the laser light L for edge cutting or hollowing.

Returning to FIG. 14, the device control unit 52 of the device-controlling control device 50 of the seventh embodiment controls each unit in the laser machining section 80 at the time of laser machining of the workpiece W to execute known alignment and formation (laser machining) of the machined groove 9 (refer to Japanese Unexamined Patent Application, First Publication No. 2021-192922). **In** addition, at the time of measuring the cross-sectional profile 64 of the machined groove 9, the device control unit 52 controls the microscope 24 or the like similarly to the foregoing first embodiment to execute the shape measurement of the machined groove 9 using the microscope 24.

The processing unit 54 of the device-controlling control device 50 of the seventh embodiment is basically the same as the processing unit 54 of the foregoing first embodiment except that it functions as the numerical value calculation unit 65 similarly to the foregoing sixth embodiment and generates the cross-sectional profile 64 of the machined groove 9 on the basis of the results of shape measurement of the machined groove 9 performed by the microscope 24.

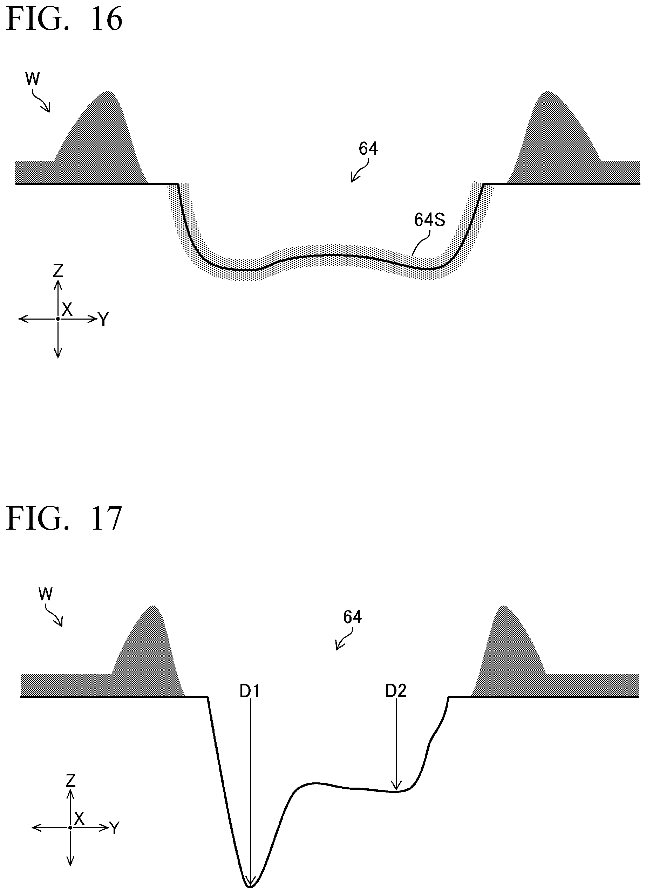

FIGS. 16 and 17 are explanatory views of an example of processing of calculating a numerical value performed by the numerical value calculation unit 65 of the seventh embodiment. The numerical value calculation unit 65 of the seventh embodiment calculates a desired numerical value indicating the machined state of the machined groove 9 (the edge cutting groove 9a and the hollow groove 9b) formed by laser machining on the basis of the cross-sectional profile 64 calculated by the cross-sectional profile calculation unit 57.

As shown in FIG. 16, examples of a desired numerical value in the seventh embodiment include a numerical value indicating the irregularity in the X direction (the machining feed direction, the longitudinal direction) on the bottom surface of the machined groove 9. At the time of laser machining, irregularity occurs in the X direction on the bottom surface of the machined groove 9 due to an output abnormality of the laser light L emitted from the laser head 82, a focus abnormality of the laser light L for edge cutting and hollowing by the condensing lens 94, and a pulse pitch abnormality of the laser light L (pulsed laser light), and these irregularities are also reflected in the cross-sectional profile 64. For this reason, an output abnormality, a focus abnormality, a pulse pitch abnormality, and the like of the laser light L can be detected by calculating the numerical value indicating the irregularity in the X direction on the bottom surface of the machined groove 9 (for example, an irregularity variation range 64S shown by displaying dots in the diagram) using the numerical value calculation unit 65.

In addition, as shown in FIG. 17, another example of a desired numerical value in the seventh embodiment is a numerical value indicating a bias in cross-sectional shape of the machined groove 9. At the time of laser machining, a bias in cross-sectional shape of the machined groove 9 occurs due to a fluctuation in position of the laser light L for hollowing, a fluctuation in optical axis of the laser light L, a fluctuation in position of the laser light L for edge cutting and hollowing, and a fluctuation in beam diameter of the laser light L. For this reason, a fluctuation in position, a fluctuation in optical axis, a fluctuation in beam diameter, and the like of the laser light L can be detected by calculating a numerical value indicating a bias in cross-sectional shape of the machined groove 9, for example, the ratio of depths D1 and D2 in both end portions of the machined groove 9 in the Y direction, using the numerical value calculation unit 65.

Returning to FIG. 14, the dicing device of the seventh embodiment will be described. The device control unit 52 of the seventh embodiment executes various evaluations, such as determination of the states of each unit in the laser machining section 80, determination of the machining quality of the machined groove 9, detection of debris, and detection of the amount of deviation in the machining position of the machined groove 9, on the basis of the cross-sectional profile 64 calculated by the cross-sectional profile calculation unit 57 and the calculation result of the numerical value calculated by the numerical value calculation unit 65.

In addition, similar to the device control unit 52 of the sixth embodiment, the device control unit 52 of the seventh embodiment controls (feedback-controls) the laser machining section 80 such that the machined groove 9 has a desired shape on the basis of the calculation result of the numerical value by the numerical value calculation unit 65.

For example, when the numerical value calculated by the numerical value calculation unit 65 is a numerical value indicating the irregularity in the X direction on the bottom surface of the machined groove 9 already described with reference to FIG. 16, and when this numerical value exceeds the design value (threshold range), the device control unit 52 determines that at least one of an output abnormality, a focus abnormality, and a pulse pitch abnormality of the laser light L already described has occurred.

Further, when an output abnormality of the laser light L occurs, the device control unit 52 executes power calibration for adjusting the attenuation rate of the laser light L in the ATT 86 on the basis of the measurement results of the PM 104 to adjust the energy of the laser light L at the machining points for edge cutting and hollowing to a desired value. In addition, when a focus abnormality of the laser light L occurs, the device control unit 52 appropriately adjusts the condensing position of the laser light L for edge cutting and hollowing by adjusting the Z positions of the condensing lens 94.

Moreover, when a pulse pitch abnormality of the laser light L occurs, the device control unit 52 adjusts the movement speed (machining feed rate) of the table 31 in the X direction by the X drive unit 35 at the time of laser machining, and the frequency of the laser light L emitted from the laser head 82. In this case, an operator may be prompted to inspect the X drive unit 35 and the laser head 82.

When the numerical value calculated by the numerical value calculation unit 65 is a numerical value indicating a bias in cross-sectional shape of the machined groove 9 already described with reference to FIG. 17, and when this numerical value exceeds the design value (threshold range), the device control unit 52 determines that at least one of a fluctuation in position, a fluctuation in optical axis, and a fluctuation in beam diameter of the laser light L already described has occurred.

Further, when a fluctuation in position of the laser light L for hollowing occurs, the device control unit 52 controls the BE 88 to adjust the beam diameter of the laser light L, thereby adjusting the position or the beam profile of the laser light L for hollowing. In addition, when a fluctuation in optical axis of the laser light L occurs, the device control unit 52 causes the laser light L to be vertically incident on the ATT 86 by executing angular adjustment of the mirrors 84A and 84B.

Moreover, when a fluctuation in position of the laser light L for edge cutting and hollowing occurs, the device control unit 52 appropriately adjusts the positions of the machining points of the laser light L for edge cutting and hollowing by adjusting the position of the condensing lens 94 in the XY directions using the position adjustment unit 96. Furthermore, when a fluctuation in beam diameter of the laser light L occurs, the BE 88 is controlled to adjust the beam diameter of the laser light L, thereby appropriately adjusting the beam diameter of the laser light L for edge cutting and hollowing.

Since a flow of the processing of measuring the cross-sectional profile 64 of the machined groove 9 and feedback control performed by the dicing device 10 of the seventh embodiment is basically the same as that of the sixth embodiment already described with reference to FIG. 13, detailed description will be omitted herein.

Even in the dicing device 10 of the seventh embodiment executing laser machining as described above, by calculating the cross-sectional profile 64 from the two-dimensional projection data 62, similar to the foregoing first embodiment, a reduction in processing load on the device-controlling control device 50 and acquisition of the highly accurate cross-sectional profile 64 of the machined groove 9 can be realized. In addition, even in the dicing device 10 of the seventh embodiment, similar to the foregoing sixth embodiment, by calculating a desired numerical value indicating the machined state of the machined groove 9 on the basis of the cross-sectional profile 64, the laser machining section 80 can be controlled (feedback-controlled) such that the machined groove 9 has a desired shape.

Similar to the dicing device 10 of the foregoing second and third embodiments, part or all of the processing executed by the processing unit 54 of the seventh embodiment may be executed by the measurement control device 50A. In addition, similar to the foregoing fourth embodiment, a plurality of dicing devices 10 of the seventh embodiment may be provided. Moreover, one measurement control device 50A may be shared by the dicing devices 10. Moreover, in the dicing device 10 of the foregoing fifth embodiment, laser machining may be executed similarly to the dicing device 10 of the seventh embodiment.

### [Others]

In each of the foregoing embodiments, processing of measuring the cross-sectional profile 64 of the machined groove 9 formed in the workpiece W by cutting or laser machining has been described as an example, but the constitution of the dicing device 10 and the method for forming the machined groove 9 (including a half-cut groove) are not particularly limited.

In the foregoing second to fourth embodiments, the number of measurement control devices 50A is one, but a plurality of measurement control devices 50A may be provided.

### REFERENCE SIGNS LIST

9 Machined groove
9a Edge cutting groove
9b Hollow groove
10 Dicing device
10A Housing
12 Loading port
14 Transportation mechanism
16 Machining section
18 Cleaning section
21A Blade
21B Blade
22A Spindle
22B Spindle
23 Microscope
24 Microscope
31 Table
31a Workpiece-holding surface
32 X base
34 X guide
35 X drive unit
36 X carriage
37 Rotation unit
41 Y base
42 Y guide
43 Y carriage
44 Z carriage
46 Grinding stone
50 Device-controlling control device
50A Measurement control device
52 Device control unit
54 Processing unit
55 Coordinate data acquisition unit
56 Projection data generation unit
57 Cross-sectional profile calculation unit
58 Data storage unit
59 Cross-sectional profile reference unit
60 Three-dimensional coordinate data
61 Two-dimensional plane
62 Two-dimensional projection data
64 Cross-sectional profile
65 Numerical calculation unit
70 Three-dimensional data generation unit
72 Cross-sectional profile generation unit
80 Laser machining section
82 Laser head
84A Mirror
84B Mirror
85 Optical axis position sensor
86 Attenuator (ATT)
88 Beam expander (BE)
90 Line element
92 Branching element
94 Condensing lens
96 Position adjustment unit
98 Dust collection section
100 Line scanning (LS) camera
102 Cleaning unit
104 Power meter (PM)
106 Beam profiler
CA Rotation axis
CP1, CP2 Cut-out position
F Frame
PC50 Device control PC
PC50A Measurement PC
W Workpiece

## Claims

1. A groove shape measurement method, comprising:
a coordinate data acquisition step of acquiring a plurality of pieces of three-dimensional coordinate data indicating a shape of a machined groove formed in a machining target object by a machining device;
a projection data generation step of generating two-dimensional projection data of the machined groove by projecting the three-dimensional coordinate data acquired in the coordinate data acquisition step onto a two-dimensional plane; and
a cross-sectional profile calculation step of calculating a cross-sectional profile of the machined groove on the basis of the two-dimensional projection data generated in the projection data generation step.

2. The groove shape measurement method according to claim 1,
wherein in the cross-sectional profile calculation step, the cross-sectional profile is calculated by performing at least one of noise removal processing and statistical processing with respect to the two-dimensional projection data.

3. The groove shape measurement method according to claim 1 or 2,
wherein processing of generating the two-dimensional projection data executed in the projection data generation step and processing of calculating the cross-sectional profile executed in the cross-sectional profile calculation step are executed in a distributed manner by a plurality of calculation devices.

4. The groove shape measurement method according to claim 3,
wherein one of the plurality of calculation devices is a control device controlling the machining device.

5. The groove shape measurement method according to claim 3,
wherein the plurality of calculation devices include control devices for the machining devices provided in a plurality of the respective machining devices, and a shared calculation device shared by the plurality of machining devices.

6. The groove shape measurement method according to claim 1 or 2,
wherein processing of generating the two-dimensional projection data executed in the projection data generation step and processing of calculating the cross-sectional profile executed in the cross-sectional profile calculation step are executed by only a calculation device different from a control device controlling the machining device.

7. The groove shape measurement method according to claim 6,
wherein the calculation device is a shared calculation device shared by a plurality of the machining devices.

8. The groove shape measurement method according to claim 1 further comprising:
a numerical value calculation step of calculating a desired numerical value indicating a machined state of the machined groove on the basis of the cross-sectional profile calculated in the cross-sectional profile calculation step.

9. The groove shape measurement method according to claim 8,
wherein in the cross-sectional profile calculation step, the cross-sectional profile is calculated by performing at least one of noise removal processing and statistical processing with respect to the two-dimensional projection data.

10. The groove shape measurement method according to claim 8 or 9,
wherein processing of generating the two-dimensional projection data executed in the projection data generation step, processing of calculating the cross-sectional profile executed in the cross-sectional profile calculation step, and processing of calculating the numerical value in the numerical value calculation step are executed in a distributed manner by a plurality of calculation devices.

11. The groove shape measurement method according to claim 10,
wherein one of the plurality of calculation devices is a control device controlling the machining device.

12. The groove shape measurement method according to claim 10
wherein the plurality of calculation devices include control devices for the machining devices provided in a plurality of the respective machining devices, and a shared calculation device shared by the plurality of machining devices.

13. The groove shape measurement method according to claim 8 or 9
wherein processing of generating the two-dimensional projection data executed in the projection data generation step, processing of calculating the cross-sectional profile executed in the cross-sectional profile calculation step, and processing of calculating the numerical value in the numerical value calculation step are executed by only a calculation device different from a control device controlling the machining device.

14. The groove shape measurement method according to claim 13
wherein the calculation device is a shared calculation device shared by a plurality of the machining devices.

15. A machining device control method, comprising:
a coordinate data acquisition step of acquiring a plurality of pieces of three-dimensional coordinate data indicating a shape of a machined groove formed in a machining target object by a machining device;
a projection data generation step of generating two-dimensional projection data of the machined groove by projecting the three-dimensional coordinate data acquired in the coordinate data acquisition step onto a two-dimensional plane;
a cross-sectional profile calculation step of calculating a cross-sectional profile of the machined groove on the basis of the two-dimensional projection data generated in the projection data generation step;
a numerical value calculation step of calculating a desired numerical value indicating a machined state of the machined groove on the basis of the cross-sectional profile calculated in the cross-sectional profile calculation step; and
a control step of controlling the machining device such that the machined groove has a desired shape on the basis of the numerical value calculated in the numerical value calculation step.

16. A groove shape measurement device, comprising:
a coordinate data acquisition unit acquiring a plurality of pieces of three-dimensional coordinate data indicating a shape of a machined groove formed in a machining target object by a machining device;
a projection data generation unit generating two-dimensional projection data of the machined groove by projecting the three-dimensional coordinate data acquired by the coordinate data acquisition unit onto a two-dimensional plane; and
a cross-sectional profile calculation unit calculating a cross-sectional profile of the machined groove on the basis of the two-dimensional projection data generated by the projection data generation unit.

17. The groove shape measurement device according to claim 16, further comprising:
a numerical value calculation unit calculating a desired numerical value indicating a machined state of the machined groove on the basis of the cross-sectional profile calculated by the cross-sectional profile calculation unit.

18. A machining device, comprising:
a machining section for forming a machined groove in a machining target object;
the groove shape measurement device according to claim 17; and
a control unit controlling the machining section such that the machined groove has a desired shape on the basis of the numerical value calculated by the numerical value calculation unit.
